# EUROPEAN PATENT SPECIFICATION

(11) **EP 3 869 719 B1**
(45) Date of publication and mention of the grant of the patent: **16.08.2023**
(21) Application number: 19881315.6
(22) Date of filing: 05.11.2019
(51) Int. Cl.: H04L 1/18, H04L 1/16, H04L 5/00, H04L 1/1607, H04L 1/1829, H04L 1/1867

(54) **METHOD AND DEVICE FOR TRANSMITTING UPLINK CONTROL INFORMATION**
VERFAHREN UND VORRICHTUNG ZUR ÜBERTRAGUNG VON UPLINK-STEUERUNGSINFORMATIONEN
PROCÉDÉ ET DISPOSITIF DE TRANSMISSION D'INFORMATIONS DE COMMANDE DE LIAISON MONTANTE

(30) Priority: 09.11.2018 CN 201811333747
(43) Date of publication of application: 25.08.2021
(73) Proprietor: Huawei Technologies Co., Ltd., Longgang District Shenzhen, Guangdong 518129 (CN)
(72) Inventor: FENG, Hao, Shenzhen, Guangdong 518129 (CN); JIAO, Shurong, Shenzhen, Guangdong 518129 (CN); HUA, Meng, Shenzhen, Guangdong 518129 (CN)
(74) Representative: Gill Jennings & Every LLP
(86) International application number: PCT/CN2019/115804
(87) International publication number: WO 2020/094025

(56) References cited:
- WO-A1-2018/146229
- WO-A2-2018/129017
- CN-A- 107 295 674
- CN-A- 107 925 525
- US-A1- 2018 035 459
- FUJITSU: "Discussion on HARQ-ACK feedback over PUCCH and PUSCH", 3GPP DRAFT; R1-1812414 DISCUSSION ON HARQ-ACK FEEDBACK OVER PUCCH AND PUSCH_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Spokane, USA; 20181112 - 20181116 2 November 2018 (2018-11-02), XP051478614, Retrieved from the Internet: URL:http://www.3gpp.org/ftp/tsg%5Fran/WG1% 5FRL1/TSGR1%5F95/Docs/R1%2D1812414%2Ezip [retrieved on 2018-11-02]
- FUJITSU: "Discussion on HARQ-ACK feedback over PUCCH and PUSCH", 3GPP DRAFT; R1-1810596 DISCUSSION ON HARQ-ACK FEEDBACK OVER PUCCH AND PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG1, no. Chengdu, China; 20181008 - 20181012 28 September 2018 (2018-09-28), pages 1-5, XP051518002, Retrieved from the Internet: URL:http://www.3gpp.org/ftp/tsg%5Fran/WG1% 5FRL1/TSGR1%5F94b/Docs/R1%2D1810596%2Ezip [retrieved on 2018-09-28]
- MEDIATEK INC: "Feasibility analysis and SLS results for UL multiplexing between eMBB and URLLC", 3GPP DRAFT; R1-1810464 FEASIBILITY ANALYSIS AND SLS RESULTS FOR UL MULTIPLEXING BETWEEN EMBB AND URLLC, 3RD GENERATION PARTNERSHIP PROJECT (3GPP), MOBILE COMPETENCE CENTRE ; 650, ROUTE DES LUCIOLES ; , 12 October 2018 (2018-10-12), pages 1-7, XP051517873, Retrieved from the Internet: URL:http://www.3gpp.org/ftp/tsg%5Fran/WG1% 5FRL1/TSGR1%5F94b/Docs/R1%2D1810464%2Ezip
- MediaTek Inc: "Feasibility analysis and SLS results for UL mu- ltiplexing between eMBB and URLLC", 3GPP Draft; R1-1810464, 12 October 2018 (2018-10-12), pages 1-7, XP051517873, Chengdu China
- MediaTek Inc: "Evaluation and analysis for UL multiplexing be- tween eMBB and URLLC", 3GPP Draft; R1-1808286, 24 August 2018 (2018-08-24), pages 1-7, XP051515670, Gothenburg Sweden

## Description

This application claims priority to Chinese Patent Application No. 201811333747.3, filed with the Chinese Patent Office on November 9, 2018 and entitled "UPLINK CONTROL INFORMATION TRANSMISSION METHOD AND APPARATUS".

### TECHNICAL FIELD

This application relates to the field of communications technologies, and in particular, to an uplink control information transmission method and an apparatus.

### BACKGROUND

In a fifth generation (the fifth generation, 5G) mobile communications system, three application scenarios are defined: enhanced mobile broadband (enhanced mobile broadband, eMBB), ultra-reliable low-latency communication (ultra reliable and low latency communications, URLLC), and massive machine-type communications (massive machine type communications, mMTC).

A data packet of a URLLC service is generated with burstiness and randomness, no data packet may be generated within a quite long time period, or a plurality of data packets may be generated within a quite short time period. A system resource is usually allocated by a base station. If the base station allocates a resource to the URLLC service in a manner of reserving the resource, the system resource is wasted when there is no URLLC service. In addition, a low-latency feature of the URLLC service requires that transmission of a data packet be completed within an extremely short time period. Therefore, the base station needs to reserve sufficiently large bandwidth for the URLLC service, and consequently, system resource utilization is relatively low.

An eMBB service has a relatively large data volume and a relatively high transmission rate. Therefore, a relatively long transmission time interval (TTI) is usually used as a time scheduling unit to perform data transmission, to improve transmission efficiency. Due to burstiness of data of the URLLC service, to improve the system resource utilization, the base station usually reserves no resource for data transmission of the URLLC service. When the data of the URLLC service arrives at the base station, if there is no idle time-frequency resource, to satisfy an ultra-low-latency requirement of the URLLC service, the base station may allocate a resource to the data of the URLLC service in a preemption (preemption) manner. Preemption means that the base station selects a part or all of allocated time-frequency resources used to transmit a first service, to transmit a second service. In this case, these time-frequency resources should originally be used to transmit the first service, but are preempted for transmission of the second service. For example, the first service is an eMBB service or a URLLC service having a low latency requirement, and the second service is a URLLC service having a relatively high latency requirement. During uplink preemption, all or a part of uplink time-frequency resources allocated to specific UE are preempted and allocated to other UE. However, priorities of some information, for example, hybrid automatic repeat request (hybrid automatic repeat request, HARQ) acknowledgement information, transmitted on the preempted uplink time-frequency resources of the UE are relatively high. How to process the high-priority information transmitted on the preempted uplink time-frequency resources of the UE is to be discussed.

WO2018/146229 relates to a base station for a mobile telecommunications system having circuitry which is configured to communicate with at least one user equipment.

FUJITSU: "Discussion on HARQ-ACK feedback over PUCCH and PUSCH", 3GPP DRAFT; R1-1812414 DISCUSSION ON HARQ-ACK FEEDBACK OVER PUCCH AND PUSCH_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPO, vol. RAN WG1, no. Spokane, USA; 20181112 - 20181116 2 November 2018 relates to HARQ-ACK feedback over PUCCH and PUSCH.

### SUMMARY

The present invention is defined by the appended claims. Embodiments not falling within the scope of the claims are exemplary only. This application provides an uplink control information transmission method and an apparatus, to resolve a problem of how to transmit HARQ acknowledgement information in a scenario in which a part or all of a first uplink resource that should originally be used to transmit the HARQ acknowledgement information is preempted.

In the solution provided by the invention, the at least one PUCCH resource that can be used to transmit the HARQ acknowledgement information in a preemption scenario is configured for the terminal device by using higher layer signaling (for example, RRC signaling). When preemption occurs, the terminal device selects a PUCCH resource (the first PUCCH resource) to send the HARQ acknowledgement information, to avoid a problem that the HARQ acknowledgement information with a relatively high priority cannot be reported due to the preemption.

### BRIEF DESCRIPTION OF DRAWINGS

FIG. 1 is a schematic architectural diagram of a wireless communications system according to an embodiment of this application;
FIG. 2 is a schematic diagram of preemption of a time-frequency resource of eMBB service data for URLLC service data according to an embodiment of this application;
FIG. 3A is a schematic diagram of downlink PIs and corresponding indication areas according to an embodiment of this application;
FIG. 3B is a schematic diagram of indication area division according to an embodiment of this application;
FIG. 3C is a schematic diagram of other indication area division according to an embodiment of this application;
FIG. 4 is a schematic diagram of uplink preemption according to an embodiment of this application;
FIG. 5 is a schematic diagram of multiplexing a PUCCH resource according to an embodiment of this application;
FIG. 6 is a schematic diagram of multiplexing a PUSCH resource according to an embodiment of this application;
FIG. 7 is a process of an uplink control information transmission method according to an embodiment of this application;
FIG. 8A is a schematic diagram of uplink PIs and corresponding indication areas according to an embodiment of this application;
FIG. 8B is a schematic diagram of other uplink PIs and corresponding indication areas according to an embodiment of this application;
FIG. 8C is a schematic diagram of still other uplink PIs and corresponding indication areas according to an embodiment of this application;
FIG. 8D is a schematic diagram, of preemption of a resource for transmitting HARQ acknowledgement information, corresponding to a first possible solution according to an embodiment of this application;
FIG. 9A is a schematic flowchart of an uplink control information transmission method corresponding to a scenario in which multiplexing is not performed and preemption occurs according to an embodiment of this application;
FIG. 9B is a schematic flowchart of an uplink control information transmission method corresponding to a scenario in which a PUCCH resource is multiplexed and preemption occurs according to an embodiment of this application;
FIG. 10 is a schematic flowchart, of an uplink control information transmission method, corresponding to a second possible solution according to an embodiment of this application;
FIG. 11A is a schematic flowchart of an uplink control information transmission method corresponding to a scenario in which a PUCCH resource is multiplexed and preemption occurs according to an embodiment of this application;
FIG. 11B is a schematic diagram, of preemption of a multiplexed PUCCH resource for transmitting HARQ acknowledgement information, corresponding to a second possible solution according to an embodiment of this application;
FIG. 11C is a schematic flowchart of an uplink control information transmission method corresponding to a scenario in which a PUSCH resource is multiplexed and preemption occurs according to an embodiment of this application;
FIG. 11D is a schematic diagram, of preemption of a multiplexed PUSCH resource for transmitting HARQ acknowledgement information, corresponding to a second possible solution according to an embodiment of this application;
FIG. 12 is a schematic flowchart of an uplink control information transmission method corresponding to a third possible solution according to an embodiment of this application;
FIG. 13 is a schematic diagram, of preemption of a multiplexed PUSCH resource for transmitting HARQ acknowledgement information, corresponding to a third possible solution according to an embodiment of this application;
FIG. 14 is a schematic structural diagram of an apparatus 1400 according to an embodiment of this application;
FIG. 15 is a schematic structural diagram of an apparatus 1500 according to an embodiment of this application;
FIG. 16 is a schematic structural diagram of a base station 1600 according to an embodiment of this application; and
FIG. 17 is a schematic structural diagram of a terminal device 1700 according to an embodiment of this application.

### DESCRIPTION OF EMBODIMENTS

Embodiments of this application may be applied to, but are not limited to, a 5G system. The 5G system is also referred to as a new radio (new radio, NR) system. The embodiments of this application may also be applied to related cellular systems such as 3rd generation partnership project (3GPP) systems, for example, an LTE system, a long term evolution-advanced (long term evolution-advanced, LTE-A) system, or an evolved long term evolution technology (enhanced long term evolution-advanced, eLTE).

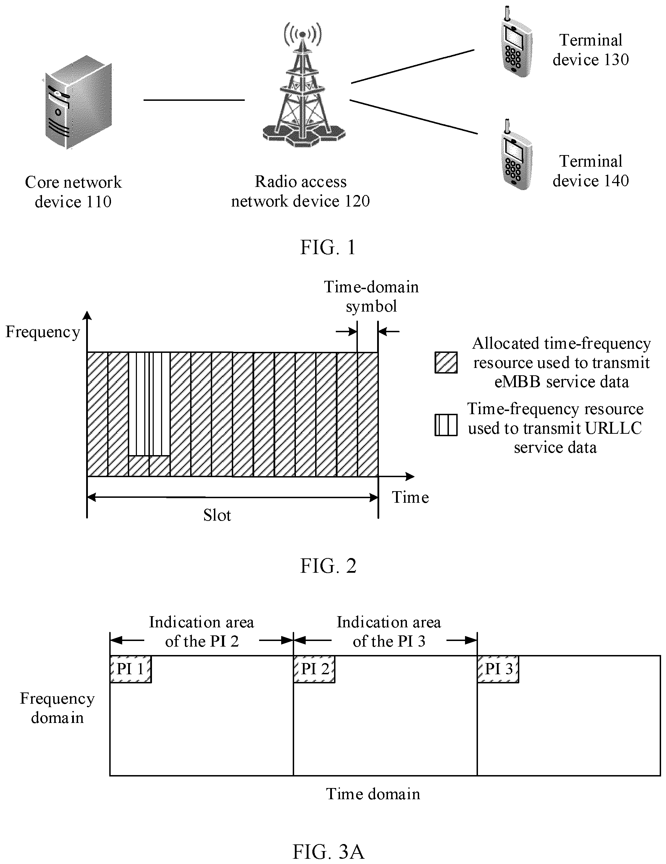

For example, FIG. 1 is a schematic architectural diagram of a mobile communications system to which the embodiments of this application may be applied. As shown in FIG. 1, the mobile communications system includes a core network device 110, a radio access network device 120, and at least two terminal devices (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different physical devices independent of each other, or functions of the core network device and logical functions of the radio access network device may be integrated into a same physical device, or some functions of the core network device and some functions of the radio access network device may be integrated into one physical device. The terminal device may be at a fixed position or may be movable. FIG. 2 is merely a schematic diagram, and the communications system may further include another network device, for example, may further include a wireless relay device and a wireless backhaul device, which are not drawn in FIG. 2. Quantities of core network devices, radio access network devices, and terminal devices included in the mobile communications system are not limited in the embodiments of this application.

The following describes some terms in this application, to facilitate understanding of a person skilled in the art.
(1) The radio access network device is an access device through which the terminal device accesses the mobile communications system in a wireless manner. The radio access network device may be a base station, for example, a NodeB (NodeB), an evolved NodeB (eNodeB), a base station in a 5G mobile communications system, a base station in a future mobile communications system, or an access node in a WiFi system. A specific technology and a specific device form used by the radio access network device are not limited in the embodiments of this application. Currently, for example, the radio access network device is a gNB, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB or a home Node B, HNB), a baseband unit (base band unit, BBU), or a wireless fidelity (wireless fidelity, Wifi) access point (access point, AP). In addition, in a network structure, the radio access network device may include a centralized unit (centralized unit, CU) node and a distributed unit (distributed unit, DU) node. In this structure, protocol layers of an eNB in a long term evolution (long term evolution, LTE) system are separate, where functions of some protocol layers are centrally controlled by the CU, functions of some or all of remaining protocol layers are distributed in the DU, and the CU centrally controls the DU.
(2) Terminal side device: The terminal side device may be the foregoing terminal device, one or more chips in the foregoing terminal device, one module in the terminal device, or the like. The terminal device is used as an example in the following description. The terminal device may also be referred to as a terminal Terminal, user equipment (user equipment, UE), a mobile station (mobile station, MS), a mobile terminal (mobile terminal, MT), or the like. The terminal device may be a mobile phone (mobile phone), a tablet computer (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in selfdriving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, including an indoor or outdoor device, a handheld device, or a vehicle-mounted device; may be deployed on water; or may be deployed on an airplane, a balloon, and a satellite in the air. Application scenarios of the radio access network device and the terminal device are not limited in the embodiments of this application.

### (3) URLLC service

The URLLC service has a very high delay requirement, and a transmission delay is generally required to be less than 1 millisecond (millisecond, ms).

In an LTE system, a minimum time scheduling unit is a transmission time interval (transmission time interval, TTI) whose time length is 1 ms. To satisfy the transmission latency requirement of the URLLC service, a shorter time scheduling unit may be used for data transmission at a radio air interface. For example, a mini-slot (mini-slot) or a slot corresponding to a greater subcarrier spacing is used as the minimum time scheduling unit. One mini-slot includes one or more time-domain symbols, and the time-domain symbol herein may be an orthogonal frequency division multiplexing (orthogonal frequency division multiplexing, OFDM) symbol. In a 5G system, a slot corresponding to a subcarrier spacing of 15 kilohertz (kilohertz, kHz) includes 14 time-domain symbols, and corresponds to a time length of 1 ms. For a slot corresponding to a subcarrier spacing of 60 kHz, a corresponding time length is shortened to 0.25 ms.

### (4) eMBB service

The eMBB service has a relatively large data and a relatively high transmission rate. Therefore, a relatively long time scheduling unit is usually used for data transmission, to improve transmission efficiency. For example, in a 5G system, a slot whose time length is 1 ms and that corresponds to subcarrier spacing is 15 kHz is used, where the slot includes 14 time-domain symbols. A relatively short time scheduling unit is usually used for URLLC service data, to satisfy an ultra-low-latency requirement. For example, two time-domain symbols corresponding to a subcarrier spacing of 15 kHz are used, and a corresponding time length is 1/7 ms.

### (5) Preemption

Due to burstiness of data of the URLLC service, to improve system resource utilization, the radio access network device usually reserves no resource for data transmission of the URLLC service. When the data of the URLLC service arrives at the radio access network device, if there is no idle time-frequency resource, to satisfy an ultra-low-latency requirement of the URLLC service, the radio access network device may allocate a resource to the data of the URLLC service in a preemption (preemption) manner. As shown in FIG. 2, the preemption herein means that the radio access network device selects a part or all of allocated time-frequency resources used to transmit a service (for example, an eMBB service), and allocates the selected time-frequency resources to another service (for example, a URLLC service of other UE) to perform transmission.

The preemption includes downlink preemption and uplink preemption.

### (1) Downlink preemption:

In the downlink preemption, all or a part of downlink time-frequency resources allocated to specific eMBB UE are preempted and allocated to other UE for URLLC service transmission or allocated to a URLLC service of the eMBB UE.

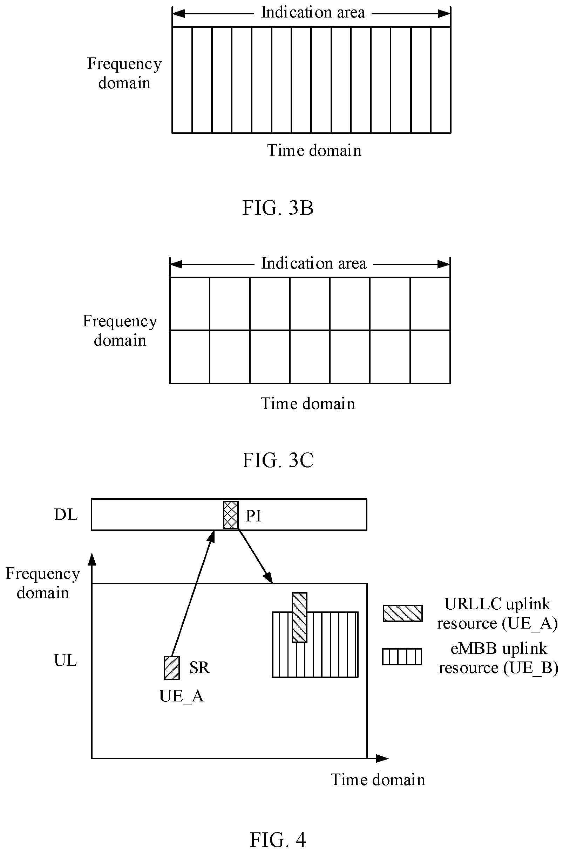

In an NR protocol, a downlink pre-emption indication (Pre-emption indicator, PI) is defined in DCI format 2_1. The downlink pre-emption indication is used to indicate an occupied time-frequency resource corresponding to UE. For a serving cell, a 14-bit bitmap may be used to indicate an indication area between two preemption indication periodicities. For example, referring to FIG. 3A, a PI 2 is used to indicate an indication area of a periodicity corresponding to a PI 1, and a PI 3 is used to indicate an indication area of a periodicity corresponding to the PI 2. There are two indication manners, which are separately (1, 14) or (2, 7). (1, 14) means that time-domain symbols included in an indication area are divided into 14 consecutive parts. Referring to FIG. 3B, each part is correspondingly indicated by using one bit. (2, 7) means that frequency domain resources included in an indication area are equally divided into two parts, and time-domain symbols are divided into seven consecutive parts, where there are 14 parts in total. Referring to FIG. 3C, each part is indicated by using one bit. For example, if a bit is 1, it indicates that there is no transmission of the UE on a corresponding time-frequency resource, that is, the time-frequency resource is occupied.

### (2) Uplink preemption:

In the downlink preemption, UE is notified of a preempted area after preemption and transmission are completed. However, in the uplink preemption, corresponding indication information (preemption information indicates that preemption is to occur) needs to be sent to a preempted UE before the preemption occurs, so that the preempted UE stops sending data in a preempted area indicated by the pre-emption indication. For example, referring to FIG. 4, the preempted UE is eMBB UE, that is, UE_A in FIG. 4. When the radio access network device receives a scheduling request (scheduling request, SR) of URLLC UE (namely, the UE_A), if an uplink resource that has been allocated to the eMBB UE (the UE_B) needs to be preempted and allocated to the URLLC UE, the radio access network device sends an uplink pre-emption indication (UL PI) to the eMBB UE (the UE_B). After successfully parsing the uplink pre-emption indication, the eMBB UE stops sending data in an occupied area indicated by the PI. The uplink resource of the UE_B is preempted, so that data transmission of the URLLC UE (namely, the UE_A) is ensured.

It should be noted that various resources (for example, various PUCCH resources or various PUSCH resources) in the embodiments of this application may be only time domain resources, only frequency domain resources, or a combination of time domain resources and frequency domain resources. Therefore, a preempted resource indicated by a pre-emption indication may be only a time domain resource, only a frequency domain resource, or a combination of a time domain resource and a frequency domain resource.

Currently, only the manner of downlink preemption is defined in the NR protocol. The uplink preemption indication is to be discussed and defined. Currently, in the uplink preemption, if a physical uplink shared channel (physical uplink shared channel, PUSCH) resource of the eMBB UE is preempted, after the uplink preemption indication is received, processing may be generally performed in the following manner.
1. Stop sending. Specifically, after receiving the uplink pre-emption indication, UE cancels sending the occupied PUSCH.
2. Stop sending only on a preempted symbol. Specifically, after receiving the uplink pre-emption indication, the UE stops sending on the preempted symbol, and continues to perform sending on a symbol that is not preempted.

However, if an uplink resource used to send demodulation reference information (demodulated reference signal, DMRS) is preempted, or a phase of a signal that continues to be sent on the symbol that is not preempted is discontinuous, received data may fail to be restored.

In addition, in the uplink preemption, a PUCCH resource carrying uplink control information (uplink control information, UCI) may alternatively be preempted. The uplink control information may include hybrid automatic repeat request (hybrid automatic repeat request, HARQ) acknowledgement information, a scheduling request (scheduling request, SR), and channel state information (channel state information, CSI). The HARQ acknowledgement information may also be referred to as HARQ-ACK information. The HARQ acknowledgement information may be an acknowledgement (acknowledgement, ACK), or may be a negative acknowledgement (negative acknowledgement, NACK). If a priority of information, for example, the HARQ acknowledgement information, transmitted by using the preempted uplink resource is relatively high, and if sending is stopped or suspended, a possibility of successfully restoring the HARQ acknowledgement information is relatively low, and successful sending of the high-priority HARQ acknowledgement information cannot be ensured.

Based on this, the embodiments of this application provide an uplink control information transmission method and an apparatus, so that when an uplink resource used by UE to transmit high-priority HARQ acknowledgement information is preempted, a reporting opportunity of the high-priority HARQ acknowledgement information is increased, and new scheduling overheads are not introduced. The method and the apparatus are based on a same inventive concept. Because a problem-resolving principle of the method is similar to that of the apparatus, for implementations of the apparatus and the method, refer to each other, and no repeated description is provided.

Before a transmission manner of uplink control information is described, a resource used to carry the HARQ acknowledgement information is first described. For ease of description, in the embodiments of this application, the resource used to carry the HARQ acknowledgement information is referred to as a first uplink resource.

A resource that is configured by a radio access network device and that is used to carry uplink control information may be a PUCCH resource. Referring to Table 1, a PUCCH format of the PUCCH resource may include the following five formats.

**Table 1**

| PUCCH format (format) | Length of occupied OFDM symbols (length in OFDM symbols) | Quantity of bits in uplink control information |
|---|---|---|
| 0 | 1-2 | ≤2 |
| 1 | 4-14 | ≤2 |
| 2 | 1-2 | >2 |
| 3 | 4-14 | >2 |
| 4 | 4-14 | >2 |

For ease of description, a PUCCH format in which a length of a symbol that can be occupied is less than or equal to a preset threshold may be referred to as a short PUCCH format. For example, the preset threshold is 2. For example, the PUCCH format 0 and the PUCCH format 2 may be referred to as short PUCCH formats. A quantity of OFDM symbols occupied by a PUCCH resource in the short PUCCH format is 1 and 2. The PUCCH format 1, the PUCCH format 3, and the PUCCH format 4 may be referred to as long PUCCH formats. A quantity of OFDM symbols occupied by a PUCCH resource in the long PUCCH format is 4 to 14.

A PUCCH resource carrying the HARQ acknowledgement information, a PUCCH resource used to carry the SR, and a PUCCH resource used to carry the CSI are usually configured separately. The PUCCH resource used to carry the SR and the PUCCH resource used to carry the CSI are configured at a higher layer, and the CSI is sent, based on a configuration periodicity, on the configured PUCCH resource used to carry the CSI. If the scheduling request is generated, the scheduling request may be sent, based on a configuration periodicity, on the configured PUCCH resource used to carry the SR.

If to-be-fed-back HARQ acknowledgement information includes an acknowledgement for reception of a physical downlink shared channel (physical downlink shared channel, PDSCH) scheduled by using a physical downlink control channel (physical downlink control channel, PDCCH), or includes an acknowledgement for reception of a PDCCH used to indicate a release of a semi-persistent scheduling PDSCH, a terminal device determines, based on downlink control information (downlink control information, DCI) and a quantity of bits in the to-be-fed-back HARQ acknowledgement information, the PUCCH resource used to carry the HARQ acknowledgement information. For example, the terminal device receives configuration information from the radio access network device. The configuration information includes a plurality of PUCCH resource sets. The radio access network device may include the configuration information in higher-layer radio resource control (radio resource control, RRC) signaling, and send the higher-layer RRC signaling to the terminal device. Each PUCCH resource set includes one or more PUCCH resources, and PUCCH resources included in the plurality of PUCCH resource sets are used to transmit uplink information. The terminal device selects one PUCCH resource set from the plurality of PUCCH resource sets based on the quantity of bits in the to-be-fed-back HARQ acknowledgement information, and determines, based on a PUCCH resource indicator field in the downlink control information, a PUCCH resource selected from the selected PUCCH resource set. The selected PUCCH resource is used to carry only the HARQ acknowledgement information in all types of uplink control information.

If the to-be-fed-back HARQ acknowledgement information is used only as an acknowledgement for reception of a PDSCH that is not scheduled by using a PDCCH, the PUCCH resource that carries the HARQ acknowledgement information is a specific PUCCH resource configured at a higher layer, and the specific PUCCH resource is used to carry only the HARQ acknowledgement information in all types of uplink control information.

For ease of description, in the embodiments of this application, the PUCCH resource that is determined based on the DCI and a quantity of bits in fed-back HARQ acknowledgement information and that is used to carry the HARQ acknowledgement information or the specific PUCCH resource configured at the higher layer is referred to as a second PUCCH resource. Uplink control information carried on the second PUCCH resource includes only the HARQ acknowledgement information. In other words, the second PUCCH resource is a PUCCH resource that is used to carry only the HARQ acknowledgement information in all uplink control information.

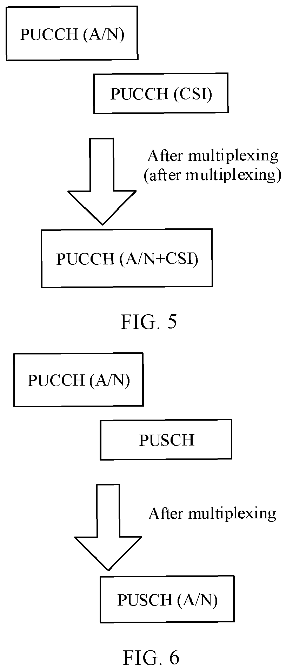

In a possible scenario, for a terminal device, the second PUCCH resource overlaps, in time domain, a PUCCH resource that carries another type of uplink control information (including the channel state information CSI and/or the scheduling request SR), and satisfies a multiplexing timing requirement. The HARQ acknowledgement information and the another type of uplink control information may be multiplexed on one PUCCH resource for sending. Referring to FIG. 5, an example in which the another type of uplink control information is the CSI is used. In FIG. 5, an acknowledgement/negative acknowledgement (A/N) represents the HARQ acknowledgement information, the second PUCCH resource used to carry the A/N overlaps, in time domain, the PUCCH resource used to carry the CSI, and the terminal device multiplexes the A/N and the CSI on one PUCCH resource for sending. For example, if the PUCCH resource used to carry the CSI is capable of carrying the CSI and the A/N, the A/N may be multiplexed on the PUCCH resource used to carry the CSI for transmission. If the PUCCH resource used to carry the A/N is capable of carrying the CSI and the A/N, the CSI may alternatively be multiplexed on the second PUCCH resource for transmission. If a quantity of bits carried by the PUCCH resource used to carry the CSI is less than a sum of a quantity of bits in the CSI and a quantity of bits in the A/N, a PUCCH resource may be reselected from the plurality of PUCCH resource sets included in the configuration information, to carry the CSI and the A/N. For ease of description, in the embodiments of this application, the PUCCH resource on which the HARQ acknowledgement information and the another type of uplink control information are multiplexed is referred to as a third PUCCH resource. It should be noted that a manner of determining the third PUCCH resource that is used after the multiplexing is not specifically limited in the embodiments of this application.

In another possible scenario, as shown in FIG. 6, for a terminal device, if a PUCCH resource carrying HARQ acknowledgement information overlaps a PUSCH resource in time domain, the HARQ acknowledgement information may be multiplexed on the PUSCH for sending.

It can be learned from the foregoing description that the first uplink resource carrying the HARQ acknowledgement information may be the second PUCCH resource, or may be the third PUCCH resource that is used after the multiplexing, or may be the PUSCH resource that is used after the multiplexing.

The following describes in detail a solution for transmitting the HARQ acknowledgement information when a part or all of the first uplink resource, carrying the HARQ acknowledgement information, of the terminal device are preempted.

First possible solution: A PUCCH resource is pre-configured at a higher layer (for example, an RRC layer) for the terminal side device. The PUCCH resource is used to transmit the HARQ acknowledgement information in a scenario in which uplink preemption occurs. In the first possible solution, the first uplink resource may be the second PUCCH, or the third PUCCH resource that is used after the multiplexing, or the PUSCH resource that is used after the multiplexing.

Second possible solution: When the first uplink resource is the third PUCCH resource that is used after the multiplexing or the PUSCH resource that is used after the multiplexing, if the second PUCCH resource that carries the HARQ acknowledgement information before the multiplexing is not occupied, the HARQ acknowledgement information may be sent on the second PUCCH resource that is used before the multiplexing.

Third possible solution: When the first uplink resource is the PUSCH resource that is used after the multiplexing, a resource area in which a PUSCH is not occupied may be searched for a new PUCCH resource, to perform sending.

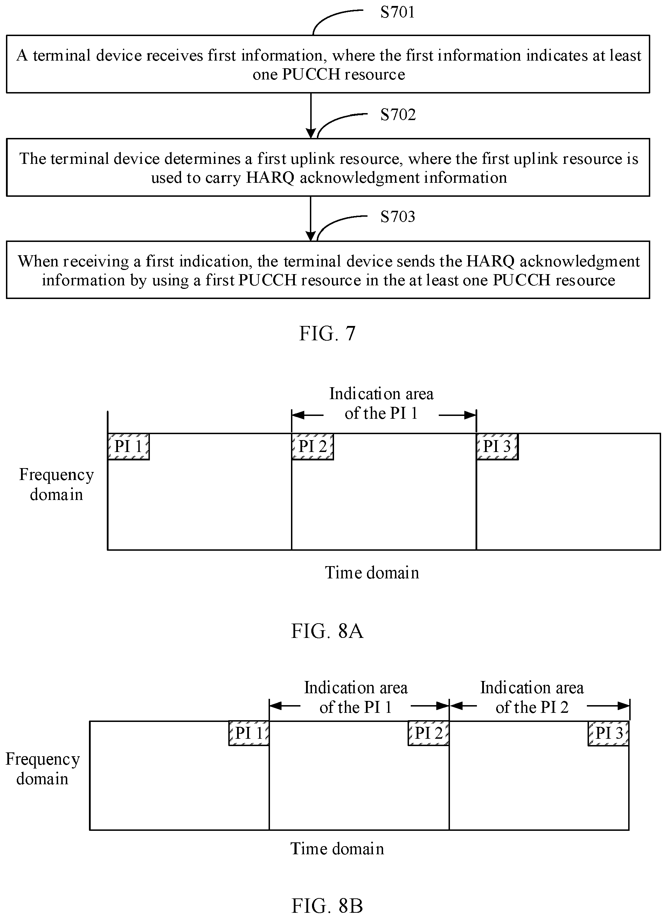

Referring to FIG. 7, an uplink control information transmission solution for the first possible solution is described in detail. A device transmitting uplink control information may be a terminal side device. The terminal side device may be a terminal device, one or more chips in a terminal device, one or more processors in a terminal device, a module in a terminal device, or the like. In the following description, the terminal device is used as an example.

S701: The terminal device receives first information, where the first information indicates at least one PUCCH resource. The at least one PUCCH resource is a PUCCH resource used to send HARQ acknowledgement information when uplink preemption occurs.

The first information may be configured for the terminal device by a radio access network device by using higher layer radio resource control (radio resource control, RRC) signaling.

The first information is from a network side device. The network side device may be a radio access network device, one or more chips in a radio access network device, one or more processors in a radio access network device, a module in a radio access network device, or the like. In the following description, the radio access network device is used as an example.

In a possible example, the first information may indicate a PUCCH resource set, and the PUCCH resource set includes the at least one PUCCH resource. The PUCCH resource in the PUCCH resource set indicated by the first information is used to carry the HARQ acknowledgement information when the uplink preemption occurs on the HARQ acknowledgement information.

In a possible example, the first information may include information about a time-frequency position of each PUCCH resource in the at least one PUCCH resource, and a format of each PUCCH resource. For example, a second message includes at least one PUCCH resource number, and each PUCCH resource number is used to indicate one PUCCH format and one time-frequency resource position. For another example, a second message includes a time-frequency position index and a format index. Different time-frequency position indexes are used to indicate PUCCH resources in different time-frequency positions, and different format indexes indicate different formats. For another example, a second message includes a time domain start position of each PUCCH resource and a quantity of symbols occupied by the PUCCH resource. For another example, a second message includes a time domain start position and a time domain end position of each PUCCH resource, and a subcarrier on which the PUCCH resource is located.

For example, the first information may indicate one PUCCH resource, or a plurality of PUCCH resources. For example, a quantity of PUCCH resources configured by RRC is 2 to 5. If the quantity of the configured PUCCH resources is 2, only two PUCCH resource formats, namely, a PUCCH format 0 and a PUCCH format 2, may be configured, so that reservation overheads can be reduced. For another example, if the quantity of the configured PUCCH resources is 5, all the PUCCH formats are included. Refer to the PUCCH formats shown in Table 1.

For example, when the first information indicates a plurality of PUCCH resources, the plurality of PUCCHs may satisfy at least one of the following conditions in time-frequency domain.

Condition 1: Time-frequency positions of different PUCCH resources may overlap or may not overlap. For example, the time-frequency positions of the different PUCCH resources may overlap in a same resource area. For example, a resource area in which a PUCCH resource in the PUCCH format 0 is located in a resource area of a PUCCH resource in the PUCCH format 2. In this manner, reservation overheads can be reduced.

Condition 2: The PUCCH resources indicated by the first information occupy last X symbols in a slot. For example, for a PUCCH resource in a short PUCCH format, X is less than or equal to 2, and a quantity of symbols occupied by the short PUCCH format is 1 or 2. Therefore, the PUCCH resource in the short PUCCH format may occupy the last symbol or last two symbols in the slot. For another example, for a PUCCH resource in a long PUCCH format, X is less than or equal to 14. Because a quantity of symbols occupied by the long PUCCH format is 4 to 14, using 4 as an example, the PUCCH resource in the long PUCCH format may occupy the last four symbols in the slot.

S702: The terminal device determines a first uplink resource, where the first uplink resource is used to carry the HARQ acknowledgement information.

Optionally, the network side device may directly allocate the first uplink resource to the terminal device by using higher layer signaling (for example, RRC signaling). Alternatively, the network side device notifies the terminal device of a plurality of candidate uplink resources by using higher layer signaling, and indicates the first uplink resource from the plurality of candidate uplink resources by using DCI in a HARQ acknowledgement information transmission process, or the terminal device determines the first uplink resource from the plurality of candidate uplink resources without a re-indication by DCI.

S703: When receiving a first indication, the terminal device sends the HARQ acknowledgement information by using a first PUCCH resource in the at least one PUCCH resource.

In this way, the network side device receives the HARQ acknowledgement information from the terminal device by using the first PUCCH resource in the at least one PUCCH resource.

The first indication indicates that a second uplink resource is preempted. That the second uplink resource is preempted means that the second uplink resource is not used by the terminal device to send data. The second uplink resource overlaps the first uplink resource. The first uplink resource may be a second PUCCH, or a third PUCCH resource that is used after multiplexing, or a PUSCH resource that is used after multiplexing.

In some documents, the first indication may also be referred to as an uplink pre-emption indication, or may be referred to as a transmission interruption indication. After receiving the pre-emption indication, the terminal device determines a resource that is of the terminal device and that is preempted, and stops control or service data transmission on the preempted resource.

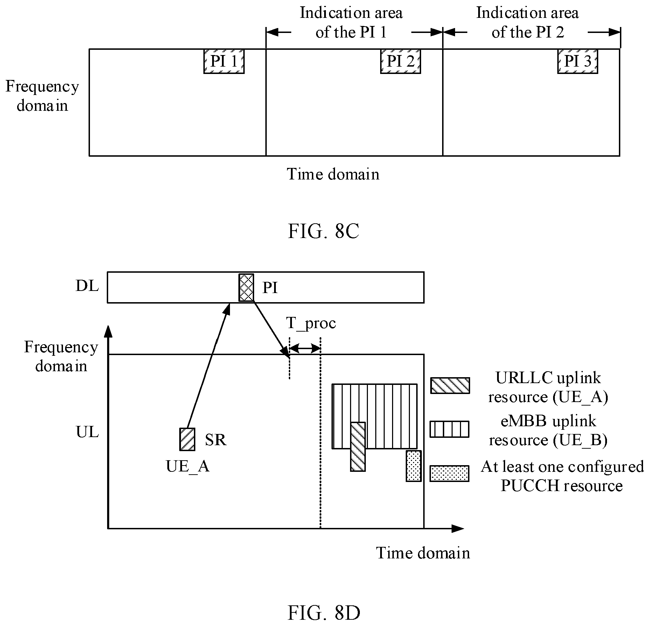

In a possible example, the first indication may be in a form of a downlink pre-emption indication, and a bitmap of a preset bit (for example, 14 bits) is used to indicate an indication area between two preemption periodicities. For example, referring to FIG. 8A, an indication area of a PI 1 is an area from a moment at which a PI 2 is received to a moment at which a next indication PI 3 is received. For another example, referring to FIG. 8B, an indication area of a PI 1 is an area from an end position of the PI 1 to an end position of a next indication PI 2, and an indication area of the PI 2 is an area from the end position of the PI 2 to an end position of a next indication PI 3. For another example, referring to FIG. 8C, an indication area of a PI 1 is an area from a moment that is after, by preset duration, a moment at which the PI 1 is received to a moment that is after, by the preset duration, a moment at which a next indication PI 2 is received. The preset duration may be several symbols. There may be two indication manners, which are separately (1, 14) or (2, 7). (1, 14) means that time-domain symbols included in the indication area are divided into 14 consecutive parts. Each part is correspondingly indicated by using one bit. (2, 7) means that frequency domain resources included in an indication area are equally divided into two parts, and time-domain symbols are divided into seven consecutive parts, where there are 14 parts in total. Each part is indicated by using one bit. For example, if a bit is 1, it indicates that a corresponding time-frequency resource is occupied.

In another possible example, the first indication may alternatively indicate the specific preempted second uplink resource, for example, indicate a time domain position and a frequency domain position of the second uplink resource. For example, the first indication indicates a time domain start position of the second uplink resource and a quantity of symbols occupied by the second uplink resource in time domain, and a subcarrier on which the second uplink resource is located. For another example, the first indication indicates a time domain start position and a time domain end position of the second uplink resource, and a subcarrier on which the second uplink resource is located.

In still another possible example, the first indication may alternatively be used to indicate only a time domain position of the specific preempted second uplink resource, for example, indicate a time domain start position of the second uplink resource and a quantity of symbols occupied by the second uplink resource in time domain. For another example, the first indication indicates a time domain start position and a time domain end position of the second uplink resource.

In a possible implementation, the first PUCCH resource selected from the at least one PUCCH resource needs to satisfy that a difference between a start moment of the first PUCCH resource and a moment at which the terminal receives the first indication is greater than or equal to duration of preparing the PUCCH resource by the terminal device. In other words, it needs to be ensured that the first PUCCH resource can be generated in time, that is, there is enough time to complete parsing the first indication and generate a new PUCCH resource after the first indication is received and before the first symbol of the PUCCH resource is sent.

For example, a time may be in a unit of a symbol or an absolute time (for example, a microsecond, a second, a minute, or an hour). If the time is in the unit of a symbol, the first PUCCH resource selected from the at least one PUCCH resource needs to satisfy that a difference between a moment of a start symbol of the first PUCCH resource and a moment at which the terminal receives an end symbol of the first indication is greater than or equal to the duration of preparing the PUCCH resource by the terminal device.

The duration of preparing the PUCCH resource by the terminal device may be duration between a moment at which the terminal device receives the last symbol of the first indication and a moment at which a start symbol of the first PUCCH resource is first generated. The duration of preparing the PUCCH resource by the terminal device may be represented by T_proc. As shown in Table 2 and Table 3, T_proc may be measured in a unit of a symbol, and is related to a processing capability of the terminal and a subcarrier spacing used for a downlink channel on which the first indication is received.

Table 2 is used to describe values, corresponding to different numerologies (numerologies), of T_proc of a terminal device having a common processing capability. Table 3 is used to describe values, corresponding to different numerologies, of T_proc of a terminal device having an enhanced processing capability. *µ* indicates an index of the numerology. The numerology may be defined by using a subcarrier spacing. Different values of *µ* correspond to different subcarrier spacings. A subcarrier spacing corresponding to *µ* = 0 is 15 kHz, a subcarrier spacing corresponding to *µ* = 1 is 30 kHz, a subcarrier spacing corresponding to *µ* = 2 is 60 kHz, and a subcarrier spacing corresponding to *µ* = 3 is 120 kHz. A symbol unit of T_proc in Table 2 and Table 3 is a symbol unit in a subcarrier spacing indicated by corresponding *µ*.

**Table 2**

| *µ* | T_proc [symbols] |
|---|---|
| 0 | 10 |
| 1 | 12 |
| 2 | 22 |
| 3 | 25 |

**Table 3**

| *µ* | T_proc [symbols] |
|---|---|
| 0 | 5 |
| 1 | 5.5 |
| 2 | 11 |

Referring to FIG. 8D, T_proc represents duration of preparing a PUCCH resource by a terminal device. UE_A represents a terminal device that performs preemption, and UE_B represents a preempted terminal device. After receiving an SR of the UE_A, if the radio access network device determines that a second uplink resource allocated to the UE_A needs to be preempted to be used as a first uplink resource of the UE_B, the radio access network device sends a first indication to the UE_B. After receiving the first indication, the UE_B may select a first PUCCH resource from at least one PUCCH resource configured by the radio access network device, and send HARQ acknowledgement information by using the selected first PUCCH resource.

When the radio access network device pre-configures a plurality of PUCCH resources, when a condition that the first PUCCH resource is not preempted and a resource can be generated in time is satisfied, the first PUCCH resource may be selected from the at least one PUCCH resource in any one of the following manners.
1. A format of the first PUCCH resource is the same as a format of the second PUCCH resource. In other words, a PUCCH resource whose PUCCH format is the same as that of the second PUCCH resource is selected from the plurality of PUCCH resources.
2. The first PUCCH resource is a PUCCH resource in a first format in the at least one PUCCH resource. A PUCCH format of each of the at least one PUCCH resource is different from a PUCCH format of the second PUCCH resource. The first format may be a short PUCCH format, for example, a PUCCH format 0 or a PUCCH format 2. For example, a quantity of symbols occupied by the PUCCH resource in the first format is less than or equal to 2. Specifically, if it is determined that the PUCCH format of each of the at least one PUCCH resource is different from the PUCCH format of the second PUCCH resource, the PUCCH resource in the first format may be selected from the plurality of PUCCH resources as the first PUCCH resource.
   For example, if it is determined that PUCCH formats of the plurality of PUCCH resources are all different from the PUCCH format of the second PUCCH resource, for example, when the PUCCH formats of the plurality of PUCCH resources are the PUCCH format 0 and the PUCCH format 2, and the PUCCH format of the second PUCCH resource is a long PUCCH format, a PUCCH resource in the PUCCH format 0 or the PUCCH format 2 may be selected, as the first PUCCH resource, from the at least one PUCCH resource based on a quantity of bits in the HARQ acknowledgement information.
3. If a quantity of bits carried by a PUCCH resource in a short PUCCH format in the plurality of PUCCH resources is less than a quantity of bits in the HARQ acknowledgement information, a PUCCH resource may be selected, as the first PUCCH resource, from PUCCH resources in a long PUCCH format in the plurality of PUCCH resources based on the quantity of bits in the HARQ acknowledgement information.
4. The first PUCCH resource is a PUCCH resource in a first format in the at least one PUCCH resource. Specifically, the terminal device may select the PUCCH resource in the first format from the plurality of PUCCH resources as the first PUCCH resource. The first format may be a PUCCH format 0 or a PUCCH format 2.
5. The terminal device selects a PUCCH resource from the plurality of PUCCH resources as the first PUCCH resource based on a quantity of bits in the HARQ acknowledgement information.
6. If a quantity of bits carried by each of the at least one PUCCH resource is less than a quantity of bits in the HARQ acknowledgement information, the HARQ acknowledgement information that is generated based on a code block group is updated to HARQ acknowledgement information that is generated based on a transport block, the first PUCCH resource is selected from the at least one PUCCH resource based on a quantity of bits in the updated HARQ acknowledgement information, and the updated HARQ acknowledgement information is sent by using the selected first PUCCH resource.

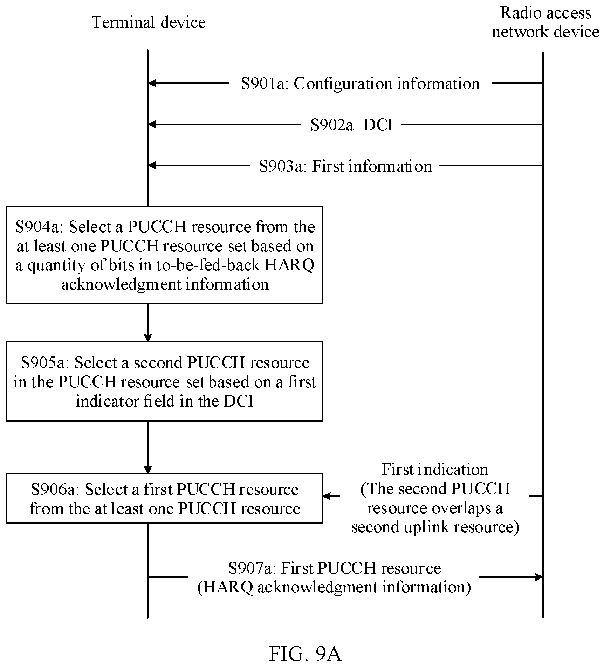

For example, referring to FIG. 9A, an example in which the first uplink resource is the second PUCCH resource is used.

S901a: The radio access network device sends configuration information to the terminal device, where the configuration information is used to indicate at least one PUCCH resource set. A PUCCH resource included in the at least one PUCCH resource set is used to transmit an uplink resource.

S902a: The radio access network device sends DCI to the terminal device. The DCI includes a PUCCH resource indicator field. The PUCCH resource indicator field is used to indicate a PUCCH resource selected from the PUCCH resource set.

S903a: The radio access network device sends first information to the terminal device, where the first information indicates at least one PUCCH resource. The at least one PUCCH resource is used to transmit HARQ acknowledgement information in a scenario in which preemption occurs.

In this embodiment of this application, a time sequence between S901a and S903a is not limited. S901a may be earlier than S903a, or may be later than S903a, or S901a and S903a may be carried in same signaling for sending.

S904a: The terminal device selects a PUCCH resource from the at least one PUCCH resource set based on a quantity of bits in to-be-fed-back HARQ acknowledgement information. Ranges of quantities of bits carried by PUCCH resources included in different PUCCH resource sets are different.

S905a: The terminal device selects the second PUCCH resource in the PUCCH resource set based on a first indicator field in the DCI.

In this embodiment, that the terminal device determines the first uplink resource means that the terminal device determines the second PUCCH resource in the PUCCH resource set based on the first indicator field in the DCI.

In addition, if the to-be-fed-back HARQ acknowledgement information is used only as an acknowledgement for reception of a PDSCH that is not scheduled by using a PDCCH, a PUCCH resource that carries the HARQ acknowledgement information may be a specific PUCCH resource configured at a higher layer, and the specific PUCCH resource is used to carry only the HARQ acknowledgement information in all types of uplink control information. In this way, the second PUCCH resource may be the specific PUCCH resource. In FIG. 9A, an example in which the second PUCCH resource is a PUCCH resource that carries the HARQ acknowledgement information and that is determined based on the DCI and the quantity of bits in the HARQ acknowledgement information is used. It should be noted that the example in which the second PUCCH resource is determined based on the DCI and the quantity of bits in the HARQ acknowledgement information is used for description in all the embodiments described below.

For example, when a start moment of the second PUCCH resource is reached and a first indication is not received, the HARQ acknowledgement information is sent on the second PUCCH resource.

The first indication indicates that a second uplink resource is preempted. The second uplink resource overlaps the second PUCCH resource.

S906a: When receiving the first indication, the terminal device selects a first PUCCH resource from the at least one PUCCH resource. The first PUCCH resource does not overlap the second uplink resource. A manner of selecting the first PUCCH resource is described above, and details are not described herein again.

S907a: The terminal device sends the HARQ acknowledgement information on the first PUCCH resource.

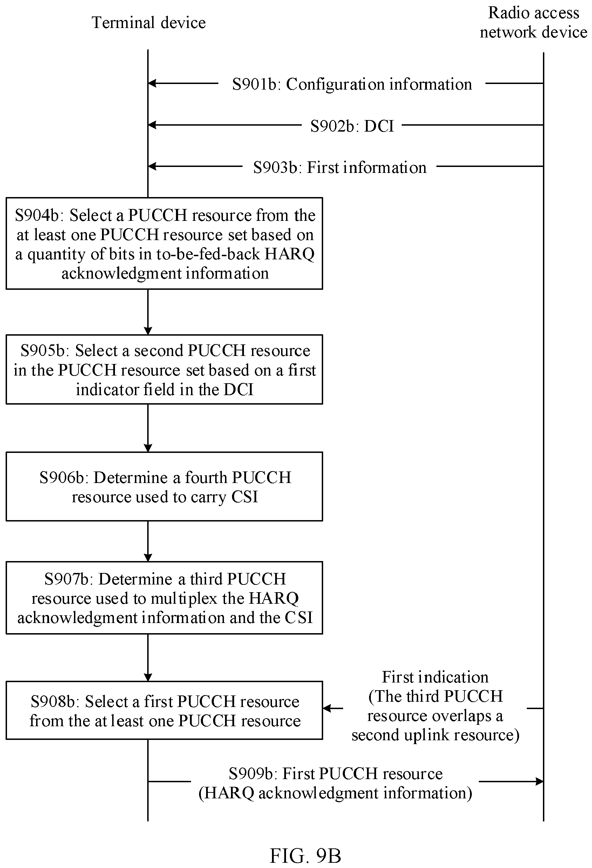

For example, referring to FIG. 9B, an example in which the first uplink resource is the third PUCCH resource that is used after multiplexing and another type of uplink control information is CSI is used.

For S901b to S905b, refer to S901a to S905a. Details are not described herein again.

S906b: The terminal device determines a fourth PUCCH resource used to carry the CSI. The fourth PUCCH resource may be a resource that is configured by using higher layer signaling and that is used to carry the CSI. That the terminal determines the fourth PUCCH resource means that the terminal determines that there is CSI to be sent, and means that the terminal determines that the fourth PUCCH resource carries the CSI.

A sequence of performing S904b and S906b is not specifically limited in this embodiment of this application. S904b may be earlier than S906b, or may be later than S906b, or S904b and S906b may be simultaneously performed.

S907b: When determining that the second PUCCH resource and the fourth PUCCH resource overlap in time domain, the terminal device determines the third PUCCH resource used to multiplex the HARQ acknowledgement information and the CSI. A manner of determining the third PUCCH resource is described above, and details are not described herein again.

In this embodiment, that the terminal device determines the first uplink resource means that the terminal device determines the third PUCCH resource used to multiplex the HARQ acknowledgement information and the CSI.

For example, when a start moment of the third PUCCH resource is reached and a first indication is not received, the HARQ acknowledgement information is sent on the third PUCCH resource. The first indication indicates that a second uplink resource is preempted. The second uplink resource overlaps the third PUCCH resource.

S908b: When receiving the first indication, the terminal device selects a first PUCCH resource from the at least one PUCCH resource. The first PUCCH resource does not overlap the second uplink resource. A manner of selecting the first PUCCH resource is described above, and details are not described herein again.

S909b: The terminal device sends the HARQ acknowledgement information on the first PUCCH resource.

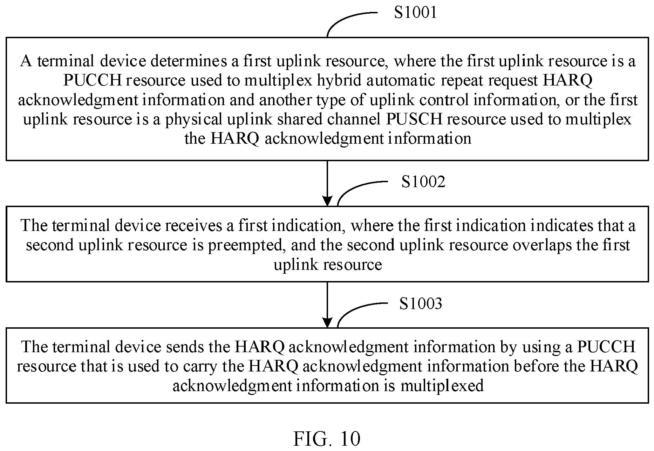

Referring to FIG. 10, an uplink control information transmission solution for the second possible solution is described in detail.

S 1001: A terminal device determines a first uplink resource, where the first uplink resource is a PUCCH resource used to multiplex hybrid automatic repeat request HARQ acknowledgement information and another type of uplink control information, or the first uplink resource is a physical uplink shared channel PUSCH resource used to multiplex the HARQ acknowledgement information.

A manner of determining the first uplink resource by the terminal device is similar to that in S702.

S 1002: The terminal device receives a first indication, where the first indication indicates that a second uplink resource is preempted, and the second uplink resource overlaps the first uplink resource. The first indication is from a radio access network device.

The first indication may also be referred to as an uplink pre-emption indication, or may be referred to as a transmission interruption indication.

The first uplink resource is the PUCCH resource used to multiplex the HARQ acknowledgement information and the another type of uplink control information other than the HARQ acknowledgement information, or the first uplink resource is the physical uplink shared channel PUSCH resource used to multiplex the HARQ acknowledgement information.

S 1003: The terminal device sends the HARQ acknowledgement information by using a PUCCH resource that is used to carry the HARQ acknowledgement information before the HARQ acknowledgement information is multiplexed.

As described above, in this embodiment of this application, the PUCCH resource that is used to carry the HARQ acknowledgement information before the HARQ acknowledgement information is multiplexed is referred to as a second PUCCH resource. The PUCCH resource on which the HARQ acknowledgement information and the another type of uplink control information other than the HARQ acknowledgement information are multiplexed is referred to as a third PUCCH resource.

In a feasible implementation, the second PUCCH resource that is used to carry the HARQ acknowledgement information before the HARQ acknowledgement information is multiplexed does not overlap the second uplink resource.

In a feasible implementation, a difference between a start moment of the second PUCCH resource that is used to carry the HARQ acknowledgement information before the HARQ acknowledgement information is multiplexed and a moment at which the terminal device receives the first indication is greater than or equal to duration of preparing the PUCCH resource by the terminal device. For the duration of preparing the PUCCH resource by the terminal device, refer to the description in the first possible solution. Details are not described herein again.

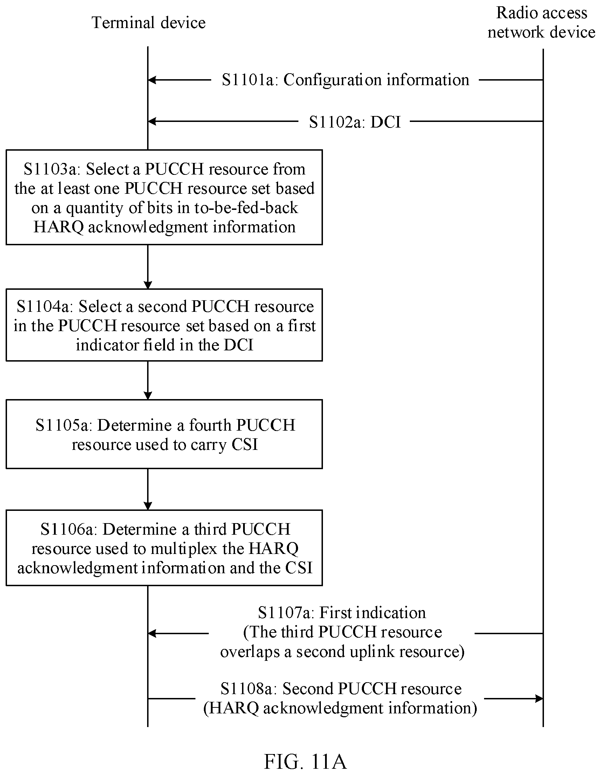

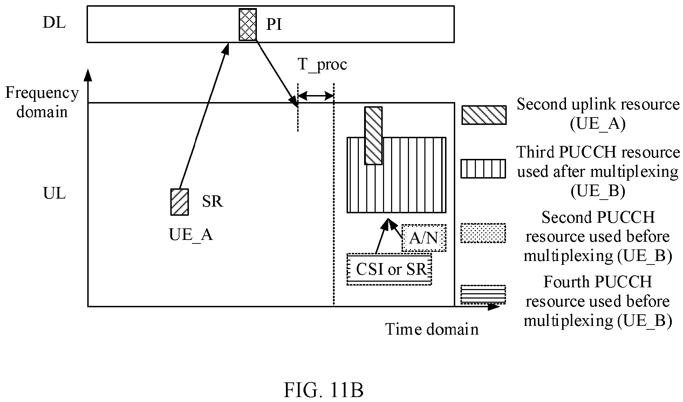

For example, referring to FIG. 11A and FIG. 11B, an example in which the first uplink resource is the third PUCCH resource used to multiplex the HARQ acknowledgement information and the another type of uplink control information other than the HARQ acknowledgement information, and the another type of uplink control information is CSI is used.

For S1101a and S1102a, refer to S901b and S902b. Details are not described herein again.

For S1103a to S1106a, refer to S904b to S907b. Details are not described herein again.

S 1107a: The terminal device receives a first indication. The first indication indicates that a second uplink resource is preempted, and the second uplink resource is not used by the terminal device to send data. The second uplink resource overlaps the third PUCCH resource.

S1108a: When the second PUCCH resource does not overlap the second uplink resource, send the HARQ acknowledgement information on the second PUCCH resource. A difference between a start moment of the second PUCCH resource and a moment at which the terminal receives the first indication is greater than or equal to duration of preparing the PUCCH resource by the terminal side device.

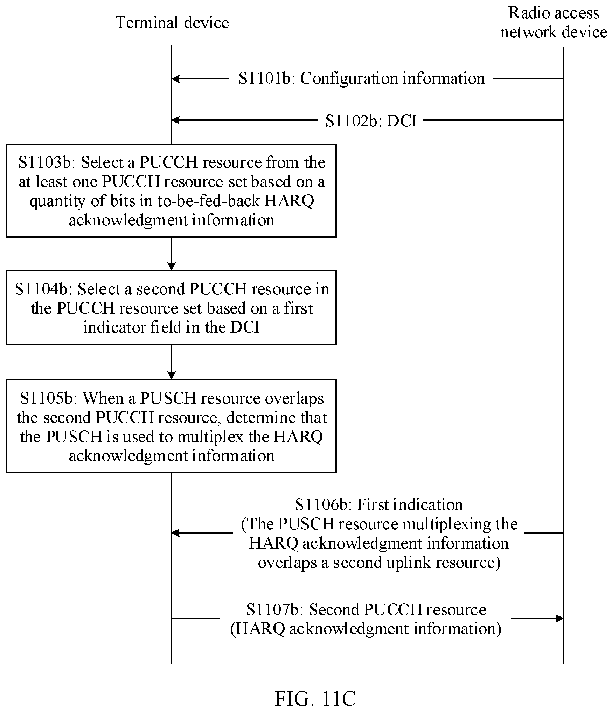

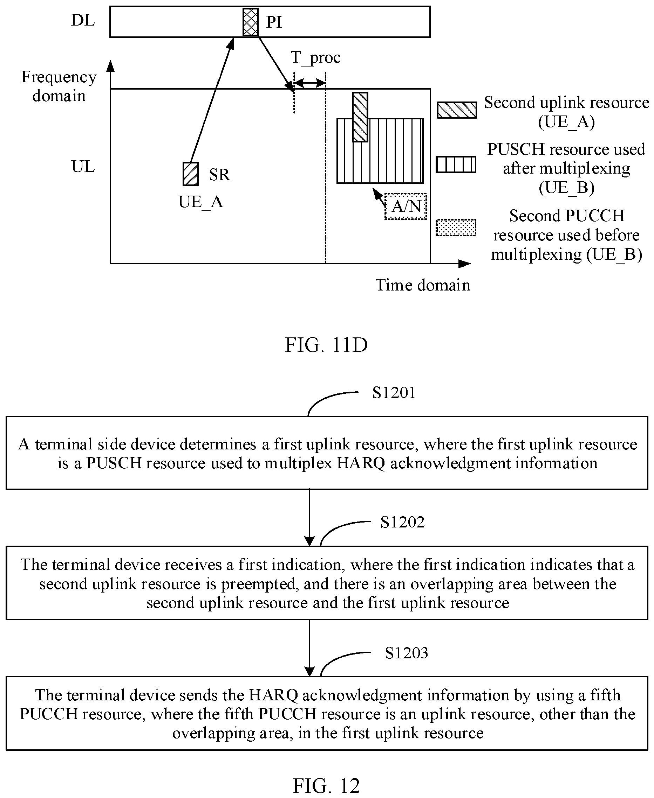

For example, referring to FIG. 11 C and FIG. 11D, an example in which the first uplink resource is the PUSCH resource used to multiplex the HARQ acknowledgement information is used.

For S1101b to S1104b, refer to S1101a to S1104a. Details are not described herein again.

S1105b: When a PUSCH resource overlaps the second PUCCH resource, determine that the PUSCH is used to multiplex the HARQ acknowledgement information. The PUSCH resource is used to carry data, an aperiodic CSI report, or a semi-persistent CSI report. The PUSCH resource may be a PUSCH resource dynamically scheduled and indicated by using downlink control information, or a semi-static resource configured by using RRC signaling and activated by using RRC signaling, or a semi-static resource configured by using RRC signaling and activated by using downlink control information.

S1106b: The terminal device receives a first indication.

The first indication indicates that a second uplink resource is preempted, and the second uplink resource is not used by the terminal device to send data. The second uplink resource overlaps the PUSCH resource used to multiplex the HARQ acknowledgement information.

S1107b: When the second PUCCH resource does not overlap the second uplink resource, send the HARQ acknowledgement information on the second PUCCH resource. A difference between a start moment of the second PUCCH resource and a moment at which the terminal receives the first indication is greater than or equal to duration of preparing the PUCCH resource by the terminal device.

Referring to FIG. 12, an uplink control information transmission solution for the third possible solution is described in detail.

S1201: A terminal device determines a first uplink resource, where the first uplink resource is a PUSCH resource used to multiplex HARQ acknowledgement information. Optionally, a determining manner is similar to that in S702.

S1202: The terminal device receives a first indication, where the first indication indicates that a second uplink resource is preempted, and there is an overlapping area between the second uplink resource and the first uplink resource.

S1203: The terminal device sends the HARQ acknowledgement information by using a fifth PUCCH resource, where the fifth PUCCH resource is an uplink resource, other than the overlapping area, in the first uplink resource.

For example, the fifth PUCCH resource is a found resource that is capable of carrying the HARQ acknowledgement information and that is in the uplink resource other than the overlapping area in the first uplink resource.

Based on the foregoing solution, the PUSCH resource multiplexing the HARQ acknowledgement information is searched for a new resource, to carry the HARQ acknowledgement information. Therefore, a PUCCH resource that carries the HARQ acknowledgement information before the HARQ acknowledgement information is multiplexed does not need to be additionally reserved, or a reserved PUCCH resource does not need to be pre-configured for use when preemption occurs, so that overheads can be reduced, and extra scheduling overheads are avoided.

It should be noted that the fifth PUCCH resource is capable of carrying the HARQ acknowledgement information. If there is no resource that is capable of carrying the HARQ acknowledgement information in the uplink resource, other than the overlapping area, in the PUSCH resource, the HARQ acknowledgement information that is generated based on a code block group (code block group, CBG) may be updated to HARQ acknowledgement information that is generated based on a transport block. In this way, an uplink resource that is capable of carrying the HARQ acknowledgement information is selected, as the fifth PUCCH resource, from the uplink resource, other than the overlapping area, in the PUSCH resource based on the updated HARQ acknowledgement information.

In a possible implementation, a format of the fifth PUCCH resource is the same as a format of a second PUCCH resource that is used to carry the HARQ acknowledgement information before the HARQ acknowledgement information is multiplexed, and/or a time-frequency domain size of the fifth PUCCH resource is the same as a time-frequency domain size of the second PUCCH resource that is used to carry the HARQ acknowledgement information before the HARQ acknowledgement information is multiplexed.

In a possible example, the format of the fifth PUCCH resource is the same as the format of the second PUCCH resource that is used to carry the HARQ acknowledgement information before the HARQ acknowledgement information is multiplexed, and the time-frequency domain size of the fifth PUCCH resource is different from the time-frequency domain size of the second PUCCH resource that is used to carry the HARQ acknowledgement information before the HARQ acknowledgement information is multiplexed. For example, a quantity of symbols occupied by the fifth PUCCH resource is less than a quantity of symbols occupied by the second PUCCH resource, and/or a quantity of subcarriers occupied by the fifth PUCCH resource is less than a quantity of subcarriers occupied by the second PUCCH resource.

In a possible example, when the fifth PUCCH resource carrying the HARQ acknowledgement information is selected from the uplink resources other than the overlapping area in the PUSCH resource, a resource whose format is the same as that of the second PUCCH resource that carries the HARQ acknowledgement information before the HARQ acknowledgement information is multiplexed and whose time-frequency domain size is the same as that of the second PUCCH resource may be selected.

In another possible example, the format of the fifth PUCCH resource is a short PUCCH format. That is, a PUCCH resource in the short PUCCH format is selected from the uplink resource, other than the overlapping area, in the PUSCH resource.

In still another possible example, when there is no resource in a format the same as that of the second PUCCH resource that carries the HARQ acknowledgement information before the HARQ acknowledgement information is multiplexed in the uplink resource, other than the overlapping area, in the PUSCH resource, a PUCCH resource in a short PUCCH format may be selected.

In addition, a difference between a start moment of the selected fifth PUCCH resource and a moment at which the terminal side device receives the first indication is greater than or equal to duration of preparing the PUCCH resource by the terminal device. For the duration of preparing the PUCCH resource by the terminal device, refer to the description in the first possible solution. Details are not described herein again.

In a possible implementation, the fifth PUCCH resource may be the first time-frequency resource that can be used as the first PUCCH resource and that is found in ascending order or descending order of time.

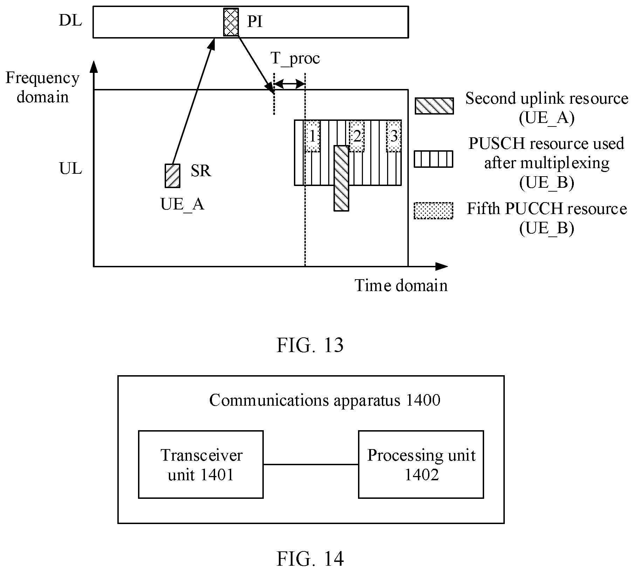

In a possible example, the first unoccupied uplink resource may be found as the fifth PUCCH resource from a timely processed position. When an uplink resource occupying a first symbol after the timely processed position does not overlap the second uplink resource, the uplink resource may be used as the fifth PUCCH resource. Refer to an area numbered 1 in FIG. 13. In FIG. 13, a part of a PUSCH resource that is of UE_B and that is used to multiplex HARQ acknowledgement information is occupied by a PUSCH (a second uplink resource) of UE_A. In this case, the UE_B may generate a new PUCCH resource in a resource area in which the PUSCH resource used to multiplex the HARQ acknowledgement information is not occupied, to carry the HARQ acknowledgement information.

In another possible example, searching may start from the first symbol after an occupied position, indicated by a first indication, of the second uplink resource. For example, if an uplink resource adjacent to the second uplink resource in time domain is capable of carrying the HARQ acknowledgement information, the uplink resource may be used as the fifth PUCCH resource. Refer to an area numbered 2 in FIG. 13.

In still another possible example, searching may start from the last symbol of the PUSCH resource used after the multiplexing. For example, when an uplink resource that occupies the last symbol of the PUSCH resource used after the multiplexing does not overlap the second uplink resource, the uplink resource may be used as the fifth PUCCH resource. In other words, the last symbol of the fifth PUCCH resource is the last symbol of the PUSCH resource. Refer to an area numbered 3 in FIG. 13.

Based on a same invention concept as that of the foregoing method embodiments, as shown in FIG. 14, this application further provides a communications apparatus 1400, which may include a transceiver unit 1401 and a processing unit 1402.

In a possible implementation, the communications apparatus 1400 may be used in a terminal device. The transceiver unit 1401 may be configured to receive first information, a first indication, or the like. The processing unit 1402 may be configured to select a PUCCH resource and so on. Specifically, the processing unit 1402 may be configured to implement a function performed by the terminal side device in any one of the foregoing method embodiments.

For example, the transceiver unit 1401 receives the first information. The first information indicates at least one physical uplink control channel PUCCH resource.

When receiving the first indication, the transceiver unit 1401 sends HARQ acknowledgement information by using a first PUCCH resource in the at least one PUCCH resource. The first indication indicates that a second uplink resource is preempted. The second uplink resource is not used by the terminal side device to send data, and the second uplink resource overlaps a first uplink resource used to carry the HARQ acknowledgement information.

The processing unit 1402 selects the first PUCCH resource from the at least one PUCCH resource.

In a possible implementation, the communications apparatus 1400 may be used in a radio access network device. The processing unit 1402 may be configured to generate the first information, and may be specifically configured to implement a function performed by the radio access network device in any one of the foregoing embodiments. The transceiver unit 1401 may be configured to send the first information or the first indication to a terminal device.

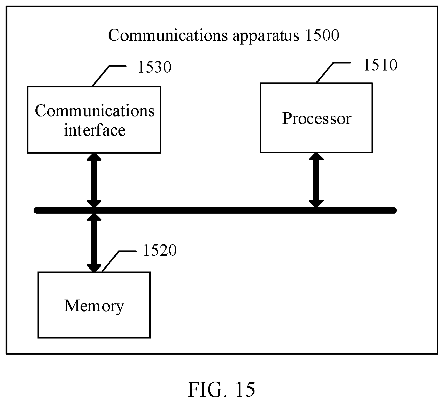

Based on a same concept, FIG. 15 shows a communications apparatus 1500 according to this application. For example, the communications apparatus 1500 may be a chip or a chip system. Optionally, in this embodiment of this application, the chip system may include a chip, or may include a chip and another discrete component. The communications apparatus 1500 may include at least one processor 1510, and the apparatus 1500 may further include at least one memory 1520, configured to store a program instruction and/or data. The memory 1520 is coupled to the processor 1510. Couplings in this embodiment of this application are indirect couplings or communication connections between apparatuses, units, or modules, may be in an electrical form, a mechanical form, or another form, and are used for information exchange between the apparatuses, the units, or the modules. The processor 1510 may operate in collaboration with the memory 1520. The processor 1510 may execute the program instruction stored in the memory 1520. Optionally, at least one of the at least one memory 1520 may be included in the processor 1510.

The communications apparatus 1500 may further include a communications interface 1530, and the communications apparatus 1500 may exchange information with another device through the communications interface 1530. The communications interface 1530 may be a circuit, a bus, a transceiver, or any other apparatus that may be configured to exchange information.

In a possible implementation, the communications apparatus 1500 may be used in a terminal device. Specifically, the communications apparatus 1500 may be a terminal device, or may be an apparatus that can support a terminal device in implementing a function of the terminal device in any one of the foregoing embodiments. The memory 1520 stores a necessary computer program instruction and/or data for implementing the function of the terminal device in any one of the foregoing embodiments. The processor 1510 may execute the computer program instruction stored in the memory 1520, to complete the method performed by the terminal device in any one of the foregoing embodiments.

In a possible implementation, the communications apparatus 1500 may be used in a radio access network device. Specifically, the communications apparatus 1500 may be a radio access network device, or may be an apparatus that can support a radio access network device in implementing a function of the radio access network device in any one of the foregoing embodiments. The memory 1520 stores a necessary computer program instruction and/or data for implementing the function of the radio access network device in any one of the foregoing embodiments. The processor 1510 may execute the computer program instruction stored in the memory 1520, to complete the method performed by the radio access network device in any one of the foregoing embodiments.

A specific connection medium between the communications interface 1530, the processor 1510, and the memory 1520 is not limited in this embodiment of this application. In this embodiment of this application, the memory 1520, the processor 1510, and the communications interface 1530 are connected through a bus in FIG. 15. The bus is represented by a thick line in FIG. 15. A connection mode between other components is merely schematically described, and is not limited thereto. The bus may be classified into an address bus, a data bus, a control bus, and the like. For ease of representation, only one thick line is used to represent the bus in FIG. 15, but this does not mean that there is only one bus or only one type of bus.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor or the like. The steps of the method disclosed with reference to the embodiments of this application may be directly performed by a hardware processor, or may be performed by using a combination of hardware in the processor and a software module.

In the embodiments of this application, the memory may be a non-volatile memory such as a hard disk drive (hard disk drive, HDD) or a solid-state drive (solid-state drive, SSD), or may be a volatile memory (volatile memory) such as a random access memory (random-access memory, RAM). The memory may alternatively be any other medium that can be configured to carry or store expected program code in a form of an instruction or a data structure and that can be accessed by a computer, but is not limited thereto. The memory in the embodiments of this application may alternatively be a circuit or any other apparatus that can implement a storage function, and is configured to store a program instruction and/or data.

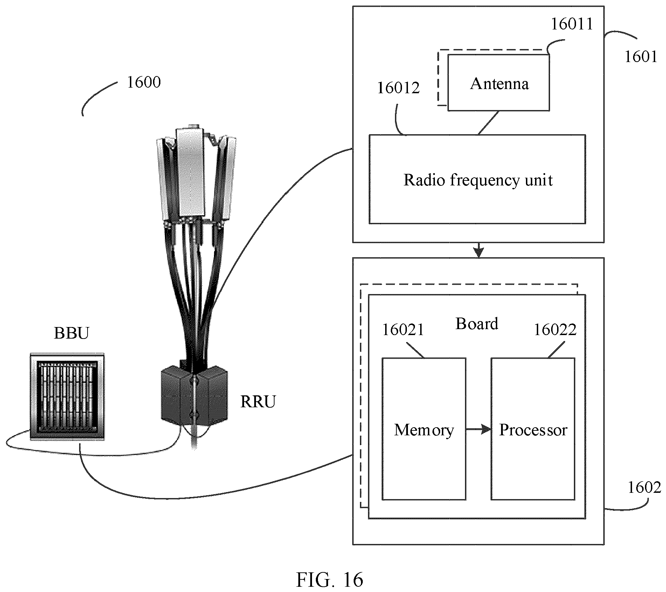

Based on the foregoing method, FIG. 16 is a schematic structural diagram of a radio access network device such as a base station 1600 according to an embodiment of this application.

The base station 1600 may be used in a scenario of the communications system shown in FIG. 1. The base station 1600 includes one or more radio frequency units such as a remote radio unit (remote radio unit, RRU) 1601 and one or more baseband units (baseband unit, BBU) (which may also be referred to as a digital unit, digital unit, DU) 1602. The RRU 1601 may be referred to as a transceiver unit, a transceiver, a transceiver circuit, a transceiver, or the like, and may include at least one antenna 16011 and a radio frequency unit 16012. The RRU 1601 may be configured to: receive and send a radio frequency signal, and perform conversion between a radio frequency signal and a baseband signal, for example, configured to send the signaling indication and/or reference signal in the foregoing embodiments to a terminal device. The BBU 1602 may be configured to perform baseband processing, control the base station, and so on. The RRU 1601 and the BBU 1602 may be physically disposed together, or may be physically separated, namely, a distributed base station.

The BBU 1602 is a control center of the base station, may also be referred to as a processing unit, and may be configured to complete a baseband processing function such as channel coding, multiplexing, modulation, or spectrum spreading. For example, the BBU (the processing unit) may be configured to control the base station to perform the method performed by the network device in any of the foregoing embodiments.

For example, the BBU 1602 may include one or more boards, and a plurality of boards may jointly support a radio access network (such as an LTE network) in a single access standard, or may separately support radio access networks in different access standards. The BBU 1602 further includes a memory 16021 and a processor 16022. The memory 16021 is configured to store an instruction and data that are necessary. For example, the memory 16021 stores the first information, the configuration information, or the like in the foregoing embodiments. The processor 16022 is configured to control the base station to perform a necessary action. The memory 16021 and the processor 16022 may serve one or more boards. In other words, a memory and a processor may be independently disposed on each board, or a plurality of boards may share a same memory and a same processor. In addition, a necessary circuit may further be disposed on each board.

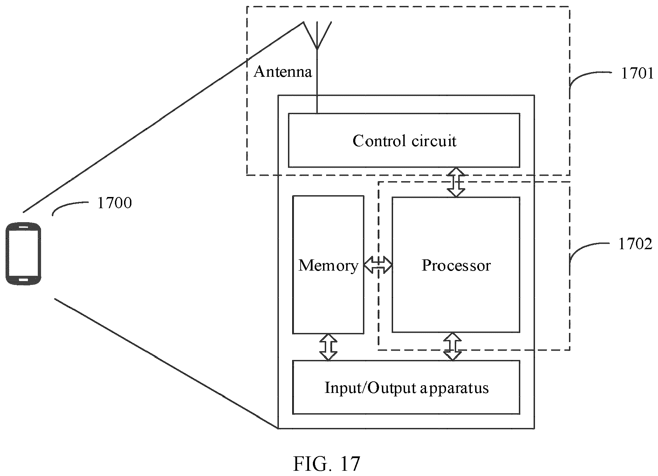

FIG. 17 is a schematic structural diagram of a terminal device. For ease of description, FIG. 17 shows only main components of the terminal device. The terminal device 1700 may be the terminal device described in any one of the foregoing embodiments of this application. As shown in FIG. 17, the terminal device 1700 may include a processor, a memory, and a control circuit. Optionally, the terminal device 1700 may further include an antenna and/or an input/output apparatus. The processor may be configured to: process a communication protocol and communication data, control the terminal device, execute a software program, and process data of the software program. The memory may be configured to store a software program and/or data. The control circuit may be configured to perform conversion between a baseband signal and a radio frequency signal, and process the radio frequency signal. A combination of the control circuit and the antenna may also be referred to as a transceiver, and may be configured to send and receive radio frequency signals in an electromagnetic wave form. The input/output apparatus, such as a touchscreen, a display, or a keyboard, may be configured to: receive data input by a user and output data to the user.

In this embodiment of this application, the processor may read the software program in a storage unit, interpret and execute an instruction of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal to the outside through the antenna in an electromagnetic wave form. When data is sent to the terminal device, the radio frequency circuit receives a radio frequency signal through the antenna, converts the radio frequency signal into a baseband signal, and outputs the baseband signal to the processor; and the processor converts the baseband signal into data, and processes the data.

A person skilled in the art may understand that for ease of description, FIG. 17 shows only one memory and one processor. An actual terminal device may have a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor may be configured to process the communication protocol and the communication data, and the central processing unit may be configured to: control the entire terminal device, execute the software program, and process the data of the software program. The processor in FIG. 17 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the storage unit in a form of a software program. The processor executes the software program to implement a baseband processing function.

For example, in this embodiment of the present invention, the antenna having a transceiver function and the control circuit may be considered as a transceiver unit 1701 of the terminal device 1700, and the processor having a processing function may be considered as a processing unit 1702 of the terminal device 1700. As shown in FIG. 17, the terminal device 1700 may include the transceiver unit 1701 and the processing unit 1702. The transceiver unit may also be referred to as a transceiver, a transceiver, a transceiver apparatus, or the like. Optionally, a component that is in the transceiver unit 1701 and that is configured to implement a receiving function may be considered as a receiving unit, and a component that is in the transceiver unit 1701 and that is configured to implement a sending function may be considered as a sending unit. In other words, the transceiver unit 1701 includes the receiving unit and the sending unit. For example, the receiving unit may also be referred to as a receiver, a receiver, a receiving circuit, or the like, and the sending unit may be referred to as a transmitter, a launcher, a transmitting circuit, or the like.

According to the method provided in the embodiments of this application, an embodiment of the present invention further provides a communications system, including one or more of the foregoing terminal device and radio access network device.

Based on the foregoing embodiments, an embodiment of this application further provides a computer storage medium. The storage medium stores a software program, and when the software program is read and executed by one or more processors, the method provided in any one or more of the foregoing embodiments may be implemented. The computer storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement a function in any one or more of the foregoing embodiments, for example, obtain or process information or a message in the foregoing methods. Optionally, the chip further includes a memory, and the memory is configured to store a program instruction and data that are necessary and executed by the processor. The chip may include a chip, or may include a chip and another discrete device.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the entire specification does not necessarily refer to a same embodiment. In addition, these particular characteristics, structures, or features may be combined in one or more embodiments in any appropriate manner. It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

In addition, the terms "system" and "network" may be used interchangeably in this specification. The term "and/or" in this specification describes only an association relationship for describing associated objects and represents that there may be three relationships. For example, A and/or B may represent three cases: There is only A, there are both A and B, and there is only B. In addition, the character "/" in this specification usually indicates an "or" relationship between the associated objects.

It should be understood that in the embodiments of this application, "B corresponding to A" indicates that B is associated with A, and B may be determined based on A. However, it should further be understood that determining B based on A does not mean that B is determined based on only A. B may alternatively be determined based on A and/or other information.

With description of the foregoing implementations, a person skilled in the art may clearly understand that this application may be implemented by hardware, firmware, or a combination thereof. When the embodiments of this application are implemented by software, the foregoing functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible by a computer. The following provides an example but does not impose a limitation: The computer-readable medium may include a RAM, a ROM, an EEPROM, a CD-ROM, another compact disc storage or magnetic disk storage medium, another magnetic storage device, or any other medium that can carry or store expected program code in a form of an instruction or a data structure and can be accessed by the computer. In addition, any connection may be appropriately defined as a computer-readable medium. For example, if software is transmitted from a website, a server, or another remote source through a coaxial cable, an optical fiber/cable, a twisted pair, a digital subscriber line (DSL) or wireless technologies such as infrared ray, radio, and microwave, the coaxial cable, optical fiber/cable, twisted pair, DSL, or the wireless technologies such as infrared ray, radio, and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc. The disk usually copies data in a magnetic manner, but the disc copies data optically through a laser. The foregoing combination shall also be included in the protection scope of the computer-readable medium.

## Claims

1. An uplink control information transmission method, wherein the method comprises:
receiving(S701), by a terminal side device, first information, wherein the first information indicates at least one physical uplink control channel, PUCCH, resource;
determining(S702), by the terminal side device, a first uplink resource, wherein the first uplink resource carries hybrid automatic repeat request, HARQ, acknowledgement information and wherein at least part of the first uplink resource that is used to transmit the HARQ acknowledgement information is preempted; and
sending(S703), by the terminal side device when receiving a first indication, the HARQ acknowledgement information by using a first PUCCH resource in the at least one PUCCH resource, wherein the first indication indicates that a second uplink resource is preempted, and the second uplink resource overlaps the first uplink resource.

2. The method according to claim 1, wherein
the first uplink resource is a PUCCH resource that carries only the HARQ acknowledgement information in all types of uplink control information; and
a format of the first PUCCH resource is the same as a format of the first uplink resource.

3. The method according to claim 1, wherein
the first uplink resource is a PUCCH resource used to multiplex the HARQ acknowledgement information and another type of uplink control information, or the first uplink resource is a physical uplink shared channel PUSCH resource used to multiplex the HARQ acknowledgement information; and
a format of the first PUCCH resource is the same as a format of a PUCCH resource that is used to carry the HARQ acknowledgement information before the HARQ acknowledgement information is multiplexed.

4. The method according to any one of claims 1 to 3, wherein the sending the HARQ acknowledgement information by using a first PUCCH resource in the at least one PUCCH resource comprises:
if a quantity of bits carried by each of the at least one PUCCH resource is less than a quantity of bits in the HARQ acknowledgement information, updating the HARQ acknowledgement information that is generated based on a code block group to HARQ acknowledgement information that is generated based on a transport block; and
selecting the first PUCCH resource from the at least one PUCCH resource based on a quantity of bits in the updated HARQ acknowledgement information, and sending the updated HARQ acknowledgement information by using the selected first PUCCH resource.

5. An uplink control information transmission method, wherein the method comprises:
sending(S701), by a network side device, first information to a terminal side device, wherein the first information indicates at least one physical uplink control channel, PUCCH, resource;
allocating, by the network side device, a first uplink resource to the terminal side device, wherein the first uplink resource is used to carry hybrid automatic repeat request HARQ acknowledgement information and at least part of the first uplink resource that is used to transmit the HARQ acknowledgement information is pre-empted;
sending(S703), by the network side device, a first indication to the terminal side device, wherein the first indication indicates that a second uplink resource is preempted, and the second uplink resource overlaps the first uplink resource; and
receiving(S703), by the network side device, the HARQ acknowledgement information from the terminal device by using a first PUCCH resource in the at least one PUCCH resource.

6. The method according to claim 5, wherein
the first uplink resource is a PUCCH resource that carries only the HARQ acknowledgement information in all types of uplink control information; and
a format of the first PUCCH resource is the same as a format of the first uplink resource.

7. The method according to claim 5, wherein
the first uplink resource is a PUCCH resource used to multiplex the HARQ acknowledgement information and another type of uplink control information, or the first uplink resource is a physical uplink shared channel PUSCH resource used to multiplex the HARQ acknowledgement information; and
a format of the first PUCCH resource is the same as a format of a PUCCH resource that is used to carry the HARQ acknowledgement information before the HARQ acknowledgement information is multiplexed.

8. An apparatus, configured to perform the method according to any one of claims 1 to 4.

9. An apparatus, configured to perform the method according to any one of claims 5 to 7.

10. A readable storage medium, comprising a program or instructions, wherein when the program or the instructions is/are run on a computer, the method according to any one of claims 1 to 7 is performed.

## Patentansprüche

1. Verfahren zum Übertragen von Uplink-Steuerinformationen, wobei das Verfahren umfasst:
Empfangen (S701) von ersten Informationen in einer endgeräteseitigen Vorrichtung, wobei die ersten Informationen mindestens eine physische Uplink-Steuerkanalressource ("Physical Uplink Control Channel resource", PUCCH-Ressource) anzeigen;
Empfangen (S702), in der endgeräteseitigen Vorrichtung, einer ersten Uplink-Ressource, wobei die erste Uplink-Ressource Bestätigungsinformationen einer hybriden automatische Wiederholungsanforderung ("Hybrid Automatic Repeat Request", HARQ) mitführt, und wobei mindestens ein Teil der ersten Uplink-Ressource, die verwendet wird, um die HARQ-Bestätigungsinformationen zu übertragen, mit Vorrang behandelt wird, und
Senden (S703), durch die endgeräteseitige Vorrichtung, wenn sie eine erste Anzeige empfängt, der HARQ-Bestätigungsinformationen, indem eine erste PUCCH-Ressource aus der mindestens einen PUCCH-Ressource verwendet wird, wobei die erste Anzeige anzeigt, dass eine zweite Uplink-Ressource mit Vorrang behandelt wird, und wobei die zweite Uplink-Ressource die erste Uplink-Ressource überschneidet.

2. Verfahren nach Anspruch 1, wobei
wobei die erste Uplink-Ressource eine PUCCH-Ressource ist, die nur die HARQ-Bestätigungsinformationen in allen Typen von Uplink-Steuerinformationen mitführt; und
wobei ein Format der ersten PUCCH-Ressource das gleiche ist wie ein Format der ersten Uplink-Ressource.

3. Verfahren nach Anspruch 1, wobei
die erste Uplink-Ressource eine PUCCH-Ressource ist, die verwendet wird, um die HARQ-Bestätigungsinformationen und einen anderen Typ von Uplink-Steuerinformationen zu multiplexen, oder wobei die erste Uplink-Ressource eine Ressource eines physischen gemeinsam genutzten Uplink-Kanals ("Physical Uplink Shared Channel resource", PUSCH-Ressource) ist, die verwendet wird, um die HARQ-Bestätigungsinformationen zu multiplexen, und
wobei ein Format der ersten PUCCH-Ressource das gleiche ist wie ein Format einer PUCCH-Ressource, die verwendet wird, um die HARQ-Bestätigungsinformationen mitzuführen, bevor die HARQ-Bestätigungsinformationen gemultiplext werden.

4. Verfahren nach einem der Ansprüche 1 bis 3, wobei das Senden der HARQ-Bestätigungsinformationen, indem eine erste PUCCH-Ressource aus der mindestens einen PUCCH-Ressource verwendet wird, umfasst:
wenn eine Anzahl von Bits, die von jeder der mindestens einen PUCCH-Ressource mitgeführt wird, geringer als eine Anzahl von Bits in den HARQ-Bestätigungsinformationen ist, Aktualisieren der HARQ-Bestätigungsinformationen, die aufgrund einer Codeblockgruppe erzeugt werden, auf HARQ-Bestätigungsinformationen, die aufgrund eines Transportblocks erzeugt werden, und Auswählen der ersten PUCCH-Ressource aus der mindestens einen PUCCH-Ressource aufgrund einer Anzahl von Bits in den aktualisierten HARQ-Bestätigungsinformationen und Senden der aktualisierten HARQ-Bestätigungsinformationen, indem die ausgewählte erste PUCCH-Ressource verwendet wird.

5. Verfahren zum Übertragen von Uplink-Steuerinformationen, wobei das Verfahren umfasst:
Senden (S701) von ersten Informationen von einer netzwerkseitigen Vorrichtung zu einer endgeräteseitigen Vorrichtung, wobei die ersten Informationen mindestens eine physische Uplink-Steuerkanalressource ("Physical Uplink Control Channel resource", PUCCH-Ressource) anzeigen;
Zuweisen, durch die netzwerkseitige Vorrichtung, einer ersten Uplink-Ressource an die endgeräteseitige Vorrichtung, wobei die erste Uplink-Ressource verwendet wird, um Bestätigungsinformationen einer hybriden automatische Wiederholungsanforderung ("Hybrid Automatic Repeat Request", HARQ) mitzuführen, und wobei mindestens ein Teil der ersten Uplink-Ressource, die verwendet wird, um die HARQ-Bestätigungsinformationen zu übertragen, mit Vorrang behandelt wird,
Senden (S703) einer ersten Anzeige von der netzwerkseitigen Vorrichtung zu der endgeräteseitigen Vorrichtung, wobei die erste Anzeige anzeigt, dass eine zweite Uplink-Ressource mit Vorrang behandelt wird, und wobei die zweite Uplink-Ressource die erste Uplink-Ressource überschneidet; und
Empfangen (S703), in der netzwerkseitigen Vorrichtung, der HARQ-Bestätigungsinformationen von der endgeräteseitigen Vorrichtung, indem eine erste PUCCH-Ressource aus der mindestens einen PUCCH-Ressource verwendet wird.

6. Verfahren nach Anspruch 5, wobei:
die erste Uplink-Ressource eine PUCCH-Ressource ist, die nur die HARQ-Bestätigungsinformationen in allen Typen von Uplink-Steuerinformationen mitführt; und
ein Format der ersten PUCCH-Ressource das gleiche ist wie ein Format der ersten Uplink-Ressource.

7. Verfahren nach Anspruch 5, wobei:
die erste Uplink-Ressource eine PUCCH-Ressource ist, die verwendet wird, um die HARQ-Bestätigungsinformationen und einen anderen Typ von Uplink-Steuerinformationen zu multiplexen, oder wobei die erste Uplink-Ressource eine Ressource eines physischen gemeinsam genutzten Uplink-Kanals ("Physical Uplink Shared Channel resource", PUSCH-Ressource) ist, die verwendet wird, um die HARQ-Bestätigungsinformationen zu multiplexen, und
ein Format der ersten PUCCH-Ressource das gleiche ist wie ein Format einer PUCCH-Ressource, die verwendet wird, um die HARQ-Bestätigungsinformationen mitzuführen, bevor die HARQ-Bestätigungsinformationen gemultiplext werden.

8. Einrichtung, die konfiguriert ist zum Durchführen des Verfahrens nach einem der Ansprüche 1 bis 4.

9. Einrichtung, die konfiguriert ist zum Durchführen des Verfahrens nach einem der Ansprüche 5 bis 7.

10. Lesbares Speichermedium, das ein Programm oder Befehle umfasst, wobei, wenn das Programm oder die Befehle in einem Computer abläuft/ablaufen, das Verfahren nach einem der Ansprüche 1 bis 7 durchgeführt wird.

## Revendications

1. Procédé de transmission d'informations de commande de liaison montante, dans lequel le procédé comprend :
la réception (S701), par un dispositif côté terminal, de premières informations, dans lequel les premières informations indiquent au moins une ressource de canal de commande de liaison montante physique, PUCCH ;
la détermination (S702), par le dispositif côté terminal, d'une première ressource de liaison montante, dans lequel la première ressource de liaison montante transporte des informations d'accusé de réception de demande de répétition automatique hybride, HARQ, et dans lequel au moins une partie de la première ressource de liaison montante qui est utilisée pour transmettre les informations d'accusé de réception HARQ est préemptée ; et
l'envoi (S703), par le dispositif côté terminal lors de la réception d'une première indication, des informations d'accusé de réception HARQ en utilisant une première ressource PUCCH parmi la ou les ressources PUCCH, dans lequel la première indication indique qu'une deuxième ressource de liaison montante est préemptée et que la deuxième ressource de liaison montante chevauche la première ressource de liaison montante.

2. Procédé selon la revendication 1, dans lequel
la première ressource de liaison montante est une ressource PUCCH qui transporte uniquement les informations d'accusé de réception HARQ dans tous les types d'informations de commande de liaison montante ; et
un format de la première ressource PUCCH est identique au format de la première ressource de liaison montante.

3. Procédé selon la revendication 1, dans lequel
la première ressource de liaison montante est une ressource PUCCH utilisée pour multiplexer les informations d'accusé de réception HARQ et un autre type d'informations de commande de liaison montante, ou la première ressource de liaison montante est une ressource de canal partagé de liaison montante physique PUSCH utilisée pour multiplexer les informations d'accusé de réception HARQ ; et
un format de la première ressource PUCCH est identique à un format d'une ressource PUCCH qui est utilisée pour transporter les informations d'accusé de réception HARQ avant que les informations d'accusé de réception HARQ ne soient multiplexées.

4. Procédé selon l'une quelconque des revendications 1 à 3, dans lequel l'envoi des informations d'accusé de réception HARQ en utilisant une première ressource PUCCH parmi la ou les ressources PUCCH comprend :
si une quantité de bits transportés par chacune de la ou des ressources PUCCH est inférieure à une quantité de bits contenus dans les informations d'accusé de réception HARQ, la mise à jour des informations d'accusé de réception HARQ générées sur la base d'un groupe de blocs de code en informations d'accusé de réception HARQ générées sur la base d'un bloc de transport ; et
la sélection de la première ressource PUCCH parmi la ou les ressources PUCCH sur la base d'une quantité de bits contenus dans les informations d'accusé de réception HARQ mises à jour, et l'envoi des informations d'accusé de réception HARQ mises à jour en utilisant la première ressource PUCCH sélectionnée.

5. Procédé de transmission d'informations de commande de liaison montante, dans lequel le procédé comprend :
l'envoi (S701), par un dispositif de réseau, de premières informations à un dispositif côté terminal, dans lequel les premières informations indiquent au moins une ressource de canal de commande de liaison montante physique, PUCCH ;
l'attribution, par le dispositif côté réseau, d'une première ressource de liaison montante au dispositif côté terminal, dans lequel la première ressource de liaison montante est utilisée pour acheminer des informations d'accusé de réception de demande de répétition automatique hybride HARQ et au moins une partie de la première ressource de liaison montante utilisée pour transmettre les informations d'accusé de réception HARQ est préemptée ;
l'envoi (S703), par le dispositif côté réseau, d'une première indication au dispositif côté terminal, dans lequel la première indication indique qu'une deuxième ressource de liaison montante est préemptée et que la deuxième ressource de liaison montante chevauche la première ressource de liaison montante ; et
la réception (S703), par le dispositif côté réseau, des informations d'accusé de réception HARQ en provenance du dispositif terminal en utilisant une première ressource PUCCH parmi la ou les ressources PUCCH.

6. Procédé selon la revendication 5, dans lequel
la première ressource de liaison montante est une ressource PUCCH qui transporte uniquement les informations d'accusé de réception HARQ dans tous les types d'informations de commande de liaison montante ; et
un format de la première ressource PUCCH est identique au format de la première ressource de liaison montante.

7. Procédé selon la revendication 5, dans lequel
la première ressource de liaison montante est une ressource PUCCH utilisée pour multiplexer les informations d'accusé de réception HARQ et un autre type d'informations de commande de liaison montante, ou la première ressource de liaison montante est une ressource de canal partagé de liaison montante physique PUSCH utilisée pour multiplexer les informations d'accusé de réception HARQ ; et
un format de la première ressource PUCCH est identique à un format d'une ressource PUCCH qui est utilisée pour transporter les informations d'accusé de réception HARQ avant que les informations d'accusé de réception HARQ ne soient multiplexées.

8. Appareil, configuré pour mettre en oeuvre le procédé selon l'une quelconque des revendications 1 à 4.

9. Appareil, configuré pour mettre en oeuvre le procédé selon l'une quelconque des revendications 5 à 7.

10. Support de stockage lisible, comprenant un programme ou des instructions, dans lequel, lorsque le programme ou les instructions est/sont exécuté(es) sur un ordinateur, le procédé selon l'une quelconque des revendications 1 à 7 est mis en oeuvre.
